# EUROPEAN PATENT APPLICATION

(11) **EP 2 110 781 A1**
(43) Date of publication of application: **21.10.2009**
(21) Application number: 09157191.9
(22) Date of filing: 02.04.2009
(51) Int. Cl.: G06Q 10/00

(54) **Method and system for automatic tracing of a computerized process using a relationship model**

(30) Priority: 15.04.2008 US 103435
(71) Applicant: SAP AG, 69190 Walldorf (DE)
(72) Inventor: Becker, Christoph, 68723, Plankstadt (DE)
(74) Representative: Richardt, Markus Albert

(57) **Abstract**

A system and method are provided for tracking an executed process. The method includes identifying a key computer object in a process. A computer object relationship model of the computer objects is analyzed to identify computer objects that are independent of and dependent on the key computer object in the model. In the executed process, instances of the key computer object, its dependent and its independent objects are located. The results of the analyzing of the computer object relationship model and the locating of the computer object instances are stored for analysis. Thus, the executed process flow can be reconstructed based on the sequence of involved instances of the computer objects without any prerequisite knowledge about how the process has been designed and should have been executed. The reconstructed process can be compared with a designed process to identify and analyze deviations between both.

## Description

### Background

The tracking of computerized business processes is an important aspect of insuring the efficient operation, and cost-effectiveness of a business. The results of the tracking can be used as evidence of compliance with company policies, statutory regulations, and the like.

Today business processes are commonly designed and modeled according to a computer object relationship model during implementation and introduction of enterprise resource planning (ERP) systems. After deployment of the ERP system, there is usually no appropriate monitoring capability that allows tracking of the business process as one instance, and in exactly the way the process operates. Processes therefore can only be tracked based on personal user knowledge of the process. Deviations from a modeled process are not always documented, so determining whether a deviation occurs can be difficult to identify. Common deviations are deviations from the designed process, or a systematic error, or a deviation of the designed and executed process (implementation error). Additionally, process updates may also not be well-documented or fully integrated into the ERP system.

Typically, deviations from a designed process and the executed process can only be tracked using manual processes. These manual processes, such as the Reverse Business Engineering (RBE) system of IBIS Prof. Thome AG, require the creation of data extraction modules that are manually built to extract the data relevant to the processes being analyzed. This is accomplished by manually reviewing relationships as they are expected to exist and extracting data based on the expected relationships. The manual processes do not take advantage of a computer object relationship model of the business process or the relationships between the involved business objects in a dynamic and flexible way.

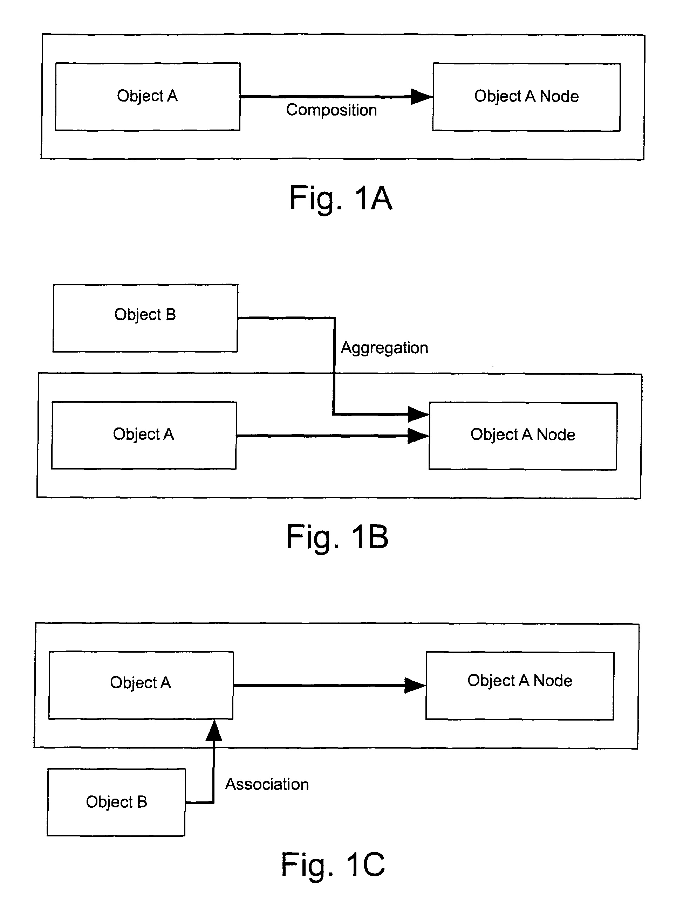

The flow of a business process is based on, or realized by, a sequence of business computer objects and their interaction being maintained by their relationship. Examples of the relationships in the computer object relationship model are illustrated in FIGS. 1A-1C. The following is not an exhaustive discussion of known computer object modeling terms, such as the terms used in the Unified Modeling Language, since such a discussion is cumulative to the knowledge of one of ordinary skill in the art. However, to ensure clarity of language used in this specification, the computer object relationships are briefly discussed.

FIG. 1A illustrates Object A that is related to Object A Node as a composition. Object A is composed of Object A Node. Objects, such as Object A, can be built from other objects, such as Object A node, to form more complex objects. When the Object A is deleted or removed from a database, Object A Node is also deleted or removed. Another type of relationship is an aggregation as illustrated in FIG. 1B. Objects A and B are "aggregated" in Object A Node. When Object A Node is called, Object B and Object A can also be called to provide data or a function to Object A Node because Objects A and B are aggregated under Object A Node. However, unlike a composition, if Object A Node is deleted or removed from a database, Objects A and B are not affected. Only the aggregation of Objects A and B under Object A Node is affected. This presents an opportunity to discuss another concept that is different, but related, to an object relationship model. It is the concept of independent objects and dependent objects. In FIG. 1B, Objects A and B are independent objects. In other words, Objects A and B are objects that stand alone without dependence on other objects. In contrast, Object A Node depends on Objects A and B to provide some data or function to it. If Objects A and B were deleted or removed from a database, Object A Node would not be able to perform its programmed function. Independent and dependent objects will be discussed in more detail later in the specification. FIG. 1C illustrates another relationship in the entity relationship model called an association. As illustrated, Object B is associated with Object A. Object B can perform an action for Object A that is defined by the association.

As is known, objects can be members of a class that contain either data and instructions to operate on data of a combination of data and instructions. An object can be an instance of a class. The object, as an instance of the class, can send and receive messages from other objects, process data and perform other known functions. A user can define the class, which will include objects sharing similar characteristics.

It would be beneficial to provide a process tracking system which utilizes a computer object relationship model to track a business computer process as it is actually executed. Further, it would be beneficial to have a tool that can analyze data in different systems, collects and aggregates necessary information, allows visualization of the process and allows simplified navigation of the detailed analysis of the process.

### Summary of Invention

The present invention provides a data processing system, a computer-implemented method and a computer readable medium as claimed in the independent claims.
Embodiments of the invention are given in the dependent claims.

In accordance with embodiments of the invention, a data processing system is provided comprising an enterprise services repository comprising a number of predefined computer objects and an enterprise services repository database containing an entity relationship model of the relations between the computer objects, the enterprise services repository database being accessible by the enterprise services repository, the computer object and their relationships as modelled by the entity relationship database being represented by a first graph, each node of the first graph being representative of one of the computer objects and each edge of the first graph being representative of a relationship between two of the computer objects that are linked by that edge in the first graph, an enterprise resource planning system for execution of a plurality of data processing tasks comprising an enterprise resource planning database for storing sets of instances of the computer objects, whereby one of the sets is created when one of the data processing tasks is executed, each one of the sets being represented by a second graph, each node of the second graph being representative of one of the instances of the computer objects and each edge of the second graph being representative of a relationship between two of the instances that are linked by that edge, a tracking tool being operable to perform pre-processing using the enterprise services repository database by accessing the enterprise services repository database through the enterprise services repository, the pre-processing comprising creating a database table entry into a tracking tool database for each computer object of the entity relationship model, each entry containing a specification of the relationships to other computer objects as specified in the entity relationship model for the computer object for which that database table entry is created, a specification of the role of that computer object, the role being one of independent object or dependent object, a first method to identify a predecessor node in one of the second graphs and a second method to identify a successor node in one of the second graphs, main access memory means (446) for storing the tracking tool database that has been created by the tracking tool as a result of the pre-processing, the tracking tool being operable to receive a user's selection of one of the instances of the computer objects that are stored in the enterprise resource planning database, and to use the first and the second method of the user selected instance to identify any successor and predecessor nodes in one of the second graphs to which the selected instance belongs and using the first and the second methods of the identified successor and predecessor nodes, if any, to identify further successors and predecessors in that second graph until all nodes of that second graph have been identified, storing and/or outputting information being descriptive of the second graph

In accordance with embodiments of the invention, the entity relationship model stored in the enterprise services repository database constitutes the first graph.

Each node of the first graph represents one of the predefined computer objects of the entity relationship model stored in the enterprise services repository database whereas each edge of the first graph represents a relationship between two of the predefined computer objects.

A second graph is created each time a data processing task is executed by the enterprise resource planning system. This is due to the fact that various computer objects are instantiated when a certain data processing task is executed whereby the instantiated computer objects have the relationships as specified in the entity relationship model.

It is important to note that a data processing task that is executed using the enterprise resource planning system can be predefined, such as when a predefined workflow is executed. Alternatively a data processing task can be executed without or deviating from a predefined workflow. For example, the users of the data processing system may deviate from a predefined workflow for practical reasons or because of the lack of a predefined workflow which would fit a required data processing task. Irrespective of the fact whether a data processing task is predefined or not, a second graph is created that contains all the instances of computer objects that are created when that data processing task is executed.

Embodiments of the present invention are particularly advantageous as the invention enables access to the second graph that contains a user selected one of the instances with minimal latency times and with minimal expenditure in terms of the data processing resources required. This is particularly advantageous if the enterprise resource planning system has real time capabilities such that a user's access to one of the second graphs does not substantially impact the real time capability and the latency times.

In particular, embodiments of the present invention provide an efficient tool for reverse engineering of the data processing tasks executed by the data processing system which can provide a basis for optimizing the data processing system, such as by optimizing the definition of its predefined data processing tasks in order to more correctly reflect the actual behaviors of its users.

In accordance with embodiments of the invention the data processing system comprises a tracking tool that can perform pre-processing of the entity relationship model stored in the enterprise services repository database. The tracking tool generates a tracking tool database that contains a database table entry for each one of the computer objects contained in the entity relationship model. Each database table entry for a given object contains the relationships of that computer object with one or more other computer objects as specified by the entity relationship model. Thus, the tracking tool captures topological information from the first graph and stores the topological information descriptive of the first graph in the tracking tool database.

In addition each database table entry for a given computer object specifies the role of that computer object which can be either independent or dependent as well as first and second methods. The first method is a data processing function that can be called to identify a predecessor of the node that represents the given computer object in the second graph and the second method is another data processing function that can be called to identify all successor nodes of the node that represents the given computer object in the second graph.

When the user enters a selection of an arbitrary one of the instantiated computer objects the tracking tool retrieves all instantiated computer objects that are related to the user selected instance. In other words, the tracking tool identifies the instances of the computer objects and their relationships that constitute the second graph to which the user selected instance belongs. This is accomplished by taking the user selected instance as the point of departure of a search process that uses the first and second methods stored in the database table entries of the tracking tool database to search both into the forward and background directions starting from the user selected instance to identify all successor and predecessor nodes that are linked to the node representing the user selected instance. The search is done in the enterprise resource planning system database where the instances of the computer objects are stored.

This search operation continues until no further successor or predecessor nodes can be retrieved. The resultant second graph is then stored and/or output such as on a graphical user interface in order to enable a user's analysis of the second graph such as for optimization of the configuration of the data processing system.

It is important to note that the tracking tool database has a smaller data volume than the enterprise services repository database such that the tracking tool database can be kept in the main memory of the data processing system. This avoids the need to query the enterprise services repository during runtime of the tracking tool.

In accordance with an embodiment of the invention, the first and/or second methods are contained in the predefined computer objects of the enterprise services repository. For example, the first and/or second methods are generated automatically using a generator software tool on the basis of the entity relationship model when the computer objects are defined.

The tracking tool copies these first and/or second methods from the enterprise services repository into the respective database table entries of the tracking tool database when the pre-processing is performed.

In accordance with an embodiment of the invention, only the first methods that enable to identify related instances of computer objects into the backward direction, i. e. from a dependent instantiated computer object to an independent instantiated computer object, are comprised in the predefined computer objects, but not the second methods that enable to identify related instances of computer objects into the forward direction. Only the first methods are thus automatically entered into the tracking tool database by the tracking tool when the pre-processing is performed whereas the second methods are added into the tracking tool database by a computer programmer through a user interface of the data processing system.

A "computer object" as understood herein consists of program code and specifies a data structure. The program code can comprise methods that can be applied to the data contained in the data structure of an instance of the computer object. A computer object can be representative of a real life business object and/or a real live business process step and it can contain the respective business logic in terms of the specified data structure and/or in terms of its methods.

An "instantiated computer object" or an "instance of a computer object" as understood herein is an instance of a computer object that has a data structure filled with actual data, such as business data. Typically the instantiated computer object has a unique identifier that is assigned to it when the instance of the respective computer object is created.

The computer objects can have predefined relationships that are modeled in an entity relationship model which is also referred to as meta model. The potential relationships are represented in a directed graph where each node of the graph represents a computer object and each directed edge in the graph represents a relationship of the respective computer objects that are linked by the edge. An independent computer object has no predecessor node in the graph but one or more successor nodes whereas a dependent computer object has at least one predecessor node and may or may not have one or more successor nodes in the graph.

When a data processing task is executed a number of the predefined computer objects are instantiated. The instantiated computer objects are linked by at least some of the relationships defined in the entity relationship model. The execution of the data processing task thus creates a graph of instantiated computer objects. Each node of the graph of instantiated computer represents one of the instantiated computer objects created by the execution of the data processing task and each directed edge of this graph represents a relationship of the two instantiated computer objects that are linked by the graph.

The term "graph" as used herein is a logical relationship between objects. In particular, the term "first graph" is used for the relationships between computer objects defined by the entity relationship model and the term "second graph" is used for the relationships between instances of the computer objects that are created when a data processing task is executed. It is to be noted that the term "graph" does not imply that the relationships described by the graph are present in a graphical form; rather a graph is a de-facto set of relationships.

By means of embodiments of the tracking tool of the invention the elements of the second graph, i.e. the instances and their respective relationships, can be identified and outputted in a visual form.

In accordance with an embodiment of the invention the analyzing of the computer readable medium comprises: reviewing the relationships of the computer objects in the computer object relationship mode with respect to the key computer object; and when a computer object contains a reference to the key computer object, identifying the computer object as a dependent computer object that is dependent of the key computer object.

In accordance with an embodiment of the invention the retrieving of the computer readable medium comprises: selecting a service from a service database to access the instances of the key computer object and the instances of the computer objects independent to and dependent from the key computer object; and calling the selected service to access the instances of the key computer object and instances of the computer objects independent to and dependent from the key computer object.

In accordance with an embodiment of the invention the analyzing of the computer readable medium comprises: searching a database to locate any computer object instances that are independent of a key computer object instance and dependent from the key computer object instance.

In another aspect the invention relates to a system for tracking an instance of a key computer object through an executed process, comprising: a display device for displaying a graphical user interface; a processor connected to the display device and configured to receive inputs from the graphical user interface, the processor comprising:
a first module for identifying a key computer object in an executed process; a second module for analyzing a computer object relationship model of software for the executed process and a database to locate computer objects that are independent of and dependent to the key computer object in the computer object relationship model;
a third module for identifying services that access instances of the key computer object and located computer objects independent of and dependent to the key computer object; a fourth module for retrieving technical information related to the instance of the key computer object and identified instances of independent and dependent computer objects using a key computer object instance identifier with the identified services;
and a data storage for storing the results obtained by the second module, the third module and the technical information obtained by the fourth module.

In accordance with an embodiment of the invention the system further comprises a fifth module for reconstructing the executed process based on the relationships of the instances of independent and dependent computer object s to the instance of the key computer object using the results and technical information stored in the database.

### Brief description of the drawings

- FIGS.1A-1C: illustrate computer object relationship model relationships between computer objects.
- FIG 2A: illustrates an example of a computer object and its relationships in the context of a business object.
- FIG. 2B: illustrates an example of a data structure representing a computer object and its relationships in the context of a business object in a database.
- FIG. 3: illustrates an exemplary business process and the generation instances of the computer object of FIGS. 2A and 2B.
- FIGS. 4A and 4B: is a flowchart of a method for initializing a tracking process according to an exemplary embodiment of the present invention.
- FIG. 5: illustrates an exemplary occurrence table of the hypothetical business process and the hypothetical relationships between business objects illustrated in FIGS. 2A, 2B and 3.
- FIGS. 6A and 6B: is a flowchart of the method for executing a tracking process according to an exemplary embodiment of the present invention.
- FIGS. 7A and 7B: illustrate another method for executing a tracking process according to another exemplary embodiment of the present invention.
- FIG. 8: shows an exemplary system for implementing the disclosed methods according to an embodiment of the present invention.

### Detailed description

Embodiments of the present invention provide for a computer-implemented method for tracking an instance of a key computer object through an executed process. The computer-implemented method includes identifying the key computer object in the executed process. A computer object relationship model of the software executing the process and a database is analyzed to locate computer objects that are independent of the key computer object and dependent from the key computer object in the computer object relationship model. Services are identified that access the key computer object, instances of the key computer object and located computer objects and instances thereof that are independent of and dependent from the key computer object. Technical information related to the instance of the key computer object and instances of the located computer objects is retrieved using a key computer object instance identifier with the located services; and the technical information is stored and outputting the results of the analyzing and the technical information to a user.

In an embodiment of the present invention, a computer readable medium embodied with program instructions causing a computer to execute a method for tracking an instance of a key computer object through an executed process. The program instructions include identifying the key computer object in the executed process. A computer object relationship model of the software executing the process and a database is analyzed to locate computer object that are independent of the key computer object and dependent from the key computer object in the computer object relationship model. Services are identified that access the key computer object, instances of the key computer object and located computer object and instances thereof that are independent of and dependent from the key computer object. Technical information related to the instance of the key computer object and instances of the located computer object is retrieved using a key computer object instance identifier with the located services; and the technical information is stored and outputting the results of the analyzing and the technical information to a user.

In an embodiment of the present invention, a system for tracking an executed process via a key computer object, includes a display device, a processor, and a data storage. The display device can display a graphical user interface. A system for tracking a key computer object through an executed process, includes a display device and a processor. The display device displays a graphical user interface. The processor is connected to the display device and configured to receive inputs from the graphical user interface. The processor executes instructions from software included in a first module for identifying a key computer object class in an executed process. A second module is provided for analyzing a computer object relationship model of the software executing the process and a database to locate computer object that are independent of and dependent to the key computer object in the computer object relationship model. A third module is provided for identifying services that access instances of the key computer object and located computer object independent of and dependent to the key computer object. A fourth module is provided for retrieving technical information related to the instance of the key computer object and identified instances of independent and dependent computer object using a key computer object instance identifier with the identified services.

Embodiments of the present invention may be used with various software applications, including but not limited to enterprise resource applications, office applications, accounting and financial applications, customer resource management applications, product lifecycle management applications, supply chain management applications, software release management applications, and research and development management applications, and the like.

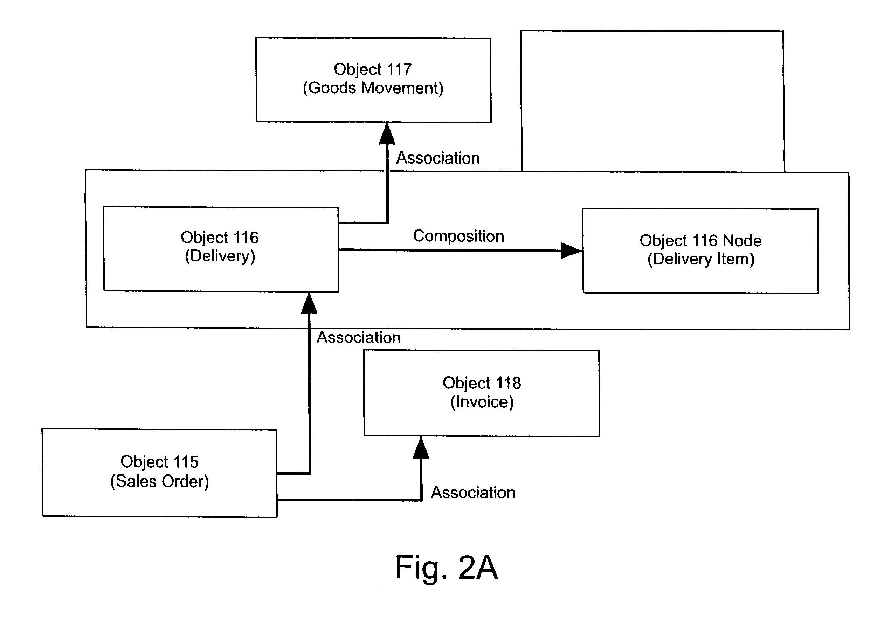

FIG. 2A illustrates an example of a computer object (or instance thereof) and its relationships in the context of a business process computer object. In an example of the use of the present invention, the object to be tracked, the key computer object, is the Object 116 (Delivery). FIG. 2A illustrates the relationship of Object 116 (Delivery) to other computer objects. Object 116 (Delivery) is associated with Object 115 (Sales Order). Object 117 (Goods Movement) is associated with Object 116 (Delivery). Object 116 (Delivery) is related to Object 116 Node (Delivery item) as a composition. Object 116 (Delivery) and Object 118 (Invoice) are associated with Object 115 (Sales Order).

Objects are not only related to one another by association and aggregation, but as independent and dependent objects with respect to each other. FIG. 2A illustrates that the terms "independent" and "dependent" are relative to each of the respective objects being analyzed. If a hypothetical object A, such as Object 116 (Delivery), has an incoming association (or aggregation, if applicable) with an object B, such as Object 115 (Sales Order), object A is dependent from object B, in which case Object 116 (Delivery) is dependent on Object 115 (Sales Order). Object A can therefore be classified as a dependent or a subordinate, object with respect to object B. As object B does not depend on object A, object B can be classified as an independent or a superior object, with respect to object A. The relationship between the dependent object and the independent object is documented by an object identifier being part of the dependent object composition.

In this sense, the independent object does not know that it is an independent object because its composition does not contain a reference to the dependent object. Only the dependent object contains this reference which is a global data type specific for the object class of the independent object. For example, Object 116 (Delivery) is independent with respect to Object 118 (Invoice), but dependent with respect to Object 115 (Sales Order). Likewise, Object 117 (Goods Movement) is dependent on Object 116 (Delivery). However, Object 115 (Sales Order) is an independent object with respect to all of the other objects in the figure. An object can be both independent and dependent.

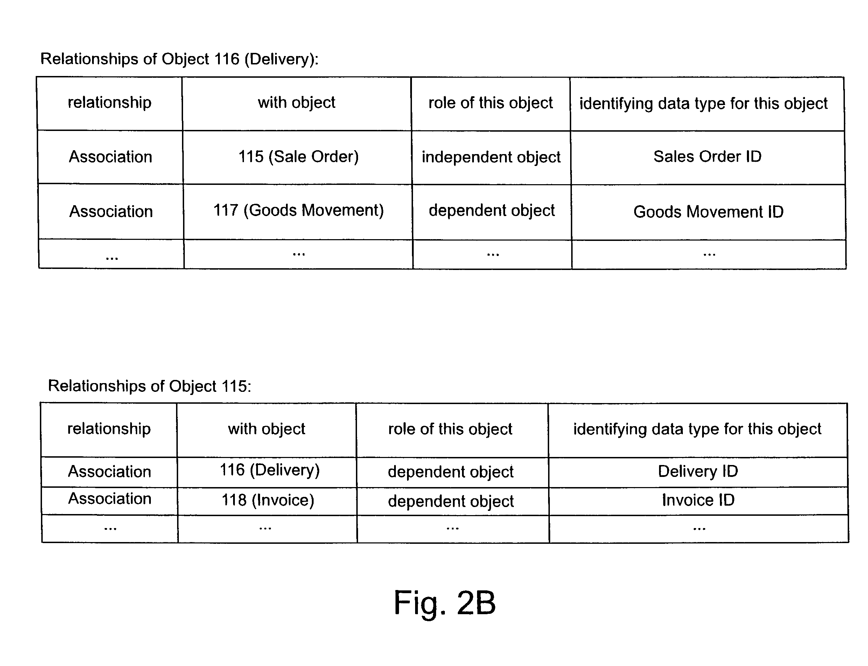

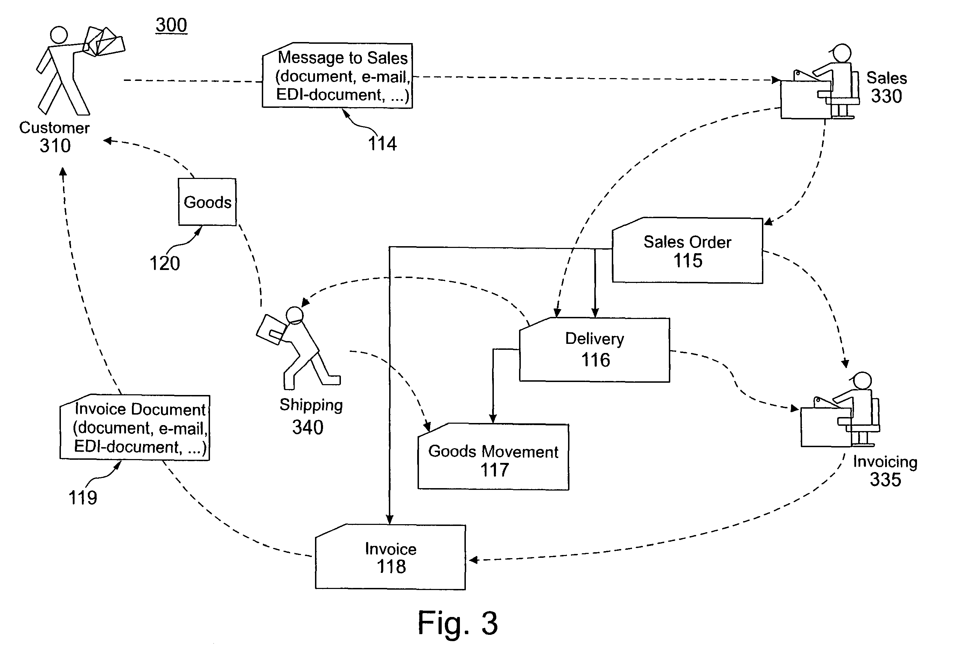

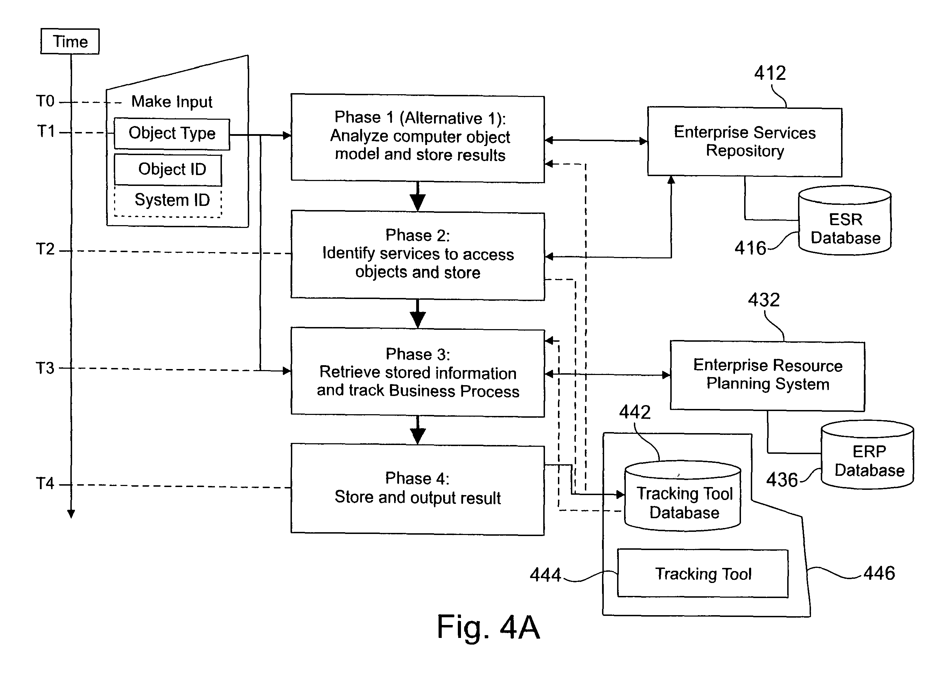

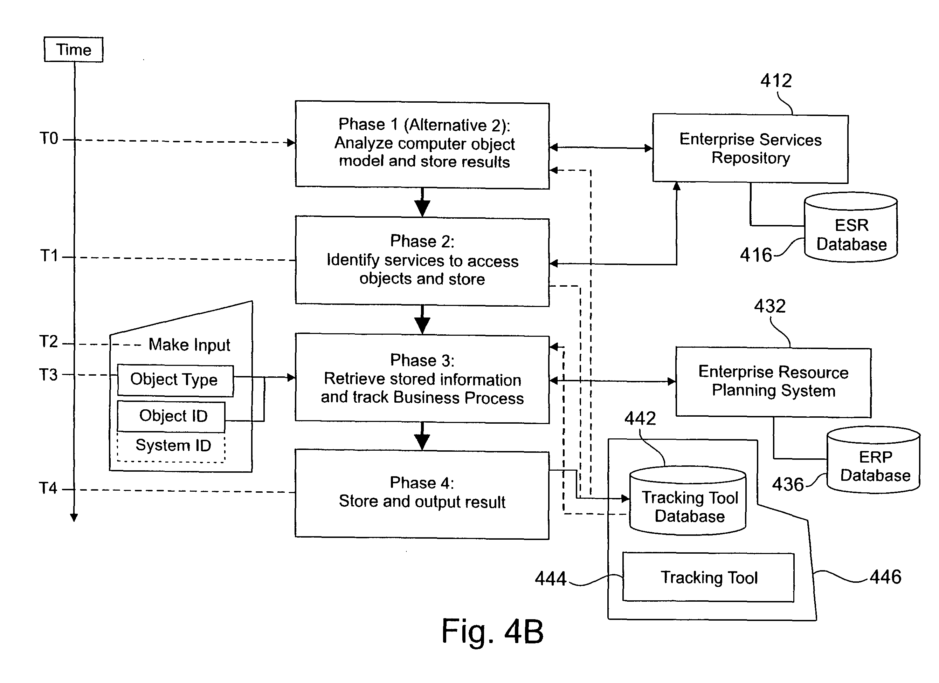

FIG. 2B illustrates an exemplary data structure for storing data related to the objects shown in FIG. 2A. The exemplary data structure for storing the data with respect to key object, Object 116 (Delivery). The data structure has the key object's relationship to other objects under RELATIONSHIP and WITH OBJECT columns. The ROLE of the object is with respect to the Object 116 (Delivery), and under the column entitled IDENTIFYING DATA TYPE FOR THIS OBJECT, the different data type identifiers are stored for each of the objects related to Object 116 (Delivery). The data type identifiers are a unique global data type specific for this object class that contains the object identifiers of the instances of that class. The class for Object 117 is the Goods Movement. For example, Object 117 (Goods Movement) is related to Object 116 (Delivery) via association. Object 117 (Goods Movement) has a role as a dependent object with respect to Object 116 (Delivery), and its identifier is Goods Movement ID in class Goods Movement. Similarly, the relationships of Object 115 (Sales Order) are stored as an association with Object 116 (Delivery) that is a dependent object identified by a data type identifier of Delivery ID. This data can be stored as alphanumeric string data or any other digital representation of data.
The manner in which each of the objects 115-118 is generated will be explained with reference to FIG. 3. The process 300 begins with Customer 310 sending a message 114, either via a document, via an e-mail or Electronic Data Interchange (EDI) document through the computer system or using any other suitable transmission channel that particular goods are ordered to be delivered to the Customer 310. Upon receiving this, Sales 330 generates an instance of Object 115 (Sales Order) in the computer system, for example, by filling in a sales order form. The data can be stored in a data structure storing the data as shown in FIG. 2B. In response to the generation of an instance of Object 115 (Sales Order), Sales 330 also generates an instance of Object 116 (Delivery). The instance of Object 116 (Delivery) is used by Shipping 340 for the shipment of the Goods 120 to the Customer 310. When the goods are prepared for shipment by Shipping 340, an instance of Object 117 (Goods Movement) is generated. When the instances of Object 116 (Sales Order) and Object 117 (Delivery) have been processed, and the Goods 120 have been shipped to the customer, Invoicing 335 generates an instance of Object 118 (Invoice) and sends the Invoice Document 119 either as a printed document, an e-mail or EDI document through the computer system, or using any other suitable transmission channel, to the Customer 310. Each of the generated object instances is stored in a database, system memory, or other form of storage. The generation of the instances of objects in response to events occurring in the business process provides instances of business computer objects for tracking the business process.
The operation of a tracking tool herein includes several phases as shown in FIGS. 4A and 4B. FIG. 4A shows a first alternative. In phase 1, the analysis phase, the tracking tool has to operate on the system containing the database 412 and 416 to identify the relationships between computer objects, to analyze their cardinality and to store this information on the tracking tool database as described in detail in the previous sections of this document. The execution of phase 1 is a prerequisite for tracking an instance of a computer object in an executed process, but phase 1 can be executed in two different ways at certain possible points in time: The alternative of FIG. 4A executes phase 1 whenever an instance of a computer object is to be tracked.

To initiate the tracking (at time T0), a user inputs an object type of the key computer object (e.g. Delivery) that the tracking tool uses, in phase 1, to analyze the computer object relationship model. In addition, at time T0, the user also enters an object identifier (e.g. 12345) of an instance of the key computer object that is of the same type as the previously entered object type. The object instance identifier is kept in the system memory, such as tracking tool database 442 or the system memory, and used later in phase 3. In phase 1, the system analyzes the computer object relationship model using the object type to locate the key computer object and other computer objects that are either independent of the key computer object or dependent on the key computer object or both. Depending upon the inputted object type, there may not be any computer objects that are dependent on the key computer object or independent of the key computer object. The location process is repeated for all identified secondary objects to identify their independent and dependent objects. This cycle is repeated iteratively until no more independent and dependent objects can be identified. The results of phase 1 is information that includes the identities of objects having the object type input by the user and identities of objects identified by the system that are related, as either independent or dependent, to objects having the object type. In phase 2 (at time T2), services (read and find services as previously explained) are identified to access the objects (and, optionally, instances thereof) located in phase 1 and data related to the identified services, such as service name and service identifiers, are stored in the tracking tool database 442. At phase 3 (at time T3), using the object identifier that has been provided to the system at time T0, the identified services retrieve technical information. The technical information, such as object types, instances of the key computer object (primary object) itself and instances of all other computer object independent of and dependent on (i.e., secondary objects) the key computer object, from the located independent and dependent computer objects can be obtained from the enterprise resource planning (ERP) system 432 and ERP database 436. From the read data sets, the identifiers for the independent, or superordinate, object instances are located with the help of the stored model and data type information and extracted to be used in the next iteration of the tracking process. In phase 4 (at time T4), the data of the located independent and dependent computer object instances is either read and stored in the tracking tool database or at least the references to all of these objects are stored.

A second alternative is illustrated in FIG. 4B. The alternative shown in FIG. 4B executes phase 1 and phase 2 at the time the model data base is installed and after each update performing a complete analysis of the computer object relationships including their cardinality for all computer objects models contained in the database and storing the result on the tracking tool database. After the execution of phase 1 is completed, phase 2 is executed identifying the services to access the business computer objects and storing the technical information to invoke the services in the tracking tool database. The second alternative therefore can start with phase 3 using the relationship information that was previously stored in tracking tool database 442 whenever an instance of a computer object is provided for tracking at time T3. In FIG. 4B, phase 1 and phase 2 do not require any information, as the computer object model and the service repository is analyzed for all object types.

In more detail with reference to FIG. 4B, in phase 1, a relationship model data structure of the involved computer objects is analyzed to identify computer objects that are independent of and dependent on a key computer object in the relationship model. Based on the results of phase 1, services are identified to access the identified objects and retrieve their data for further processing and storing. Tracking the executed process with the tracking tool, instances of the key computer object (primary object) itself and instances of all other computer objects independent of and dependent on (i.e., secondary objects) the key computer object are located and their data is read using the identified services. At phase 3 (at time T3), an object type and an identifier of a corresponding object instance of that object type is input into the tracking tool. This is different from the embodiment described in FIG. 4A. Using the inputted object type and object instance identifier, identified services are called to find, if needed, and read the data sets of instances of the computer objects found in phase 1, the identifiers for the independent, or superordinate, objects are located with the help of the stored model and data type information and extracted to be used in the next iteration of the tracking process. The retrieving process of phase 3 is repeated for all identified instances of secondary objects to identify their independent and dependent object instances. In an alternative embodiment, during phase 3, a system memory can also be searched to locate any computer object instances that are independent of a key computer object instance and dependent from the key computer object instance. In phase 4, the data of the located object instance is either read and stored in the tracking tool database or at least the references to all of these objects are stored. Reading of the data in phase 4 is not necessary if the complete data to be stored has already been read in phase 3 and has been kept in the system memory until phase 4 starts at T4. With storing of this data, the tracking tool can also create context information that clusters the data with respect to the original key object, the execution time and parameters of the tracking, the user initiating the tracking and identification information that allows the tool to identify and access the collected tracking information at a later point in time for output, analysis, comparison, statistics and similar kinds of operation that can be performed with this data.

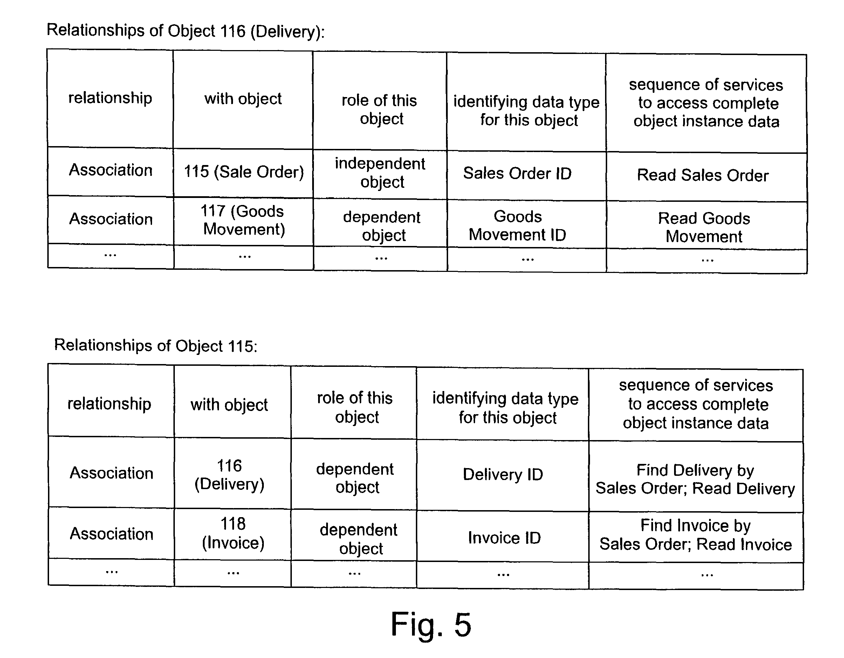

FIG. 5 illustrates a data structure similar to that shown in FIG. 2 that includes a sequence of services to access complete object instance data. A possible convention to name this kind services could be "Read <business object name>", e.g. "Read Sales Order".

Object instances of dependent, or subordinate, objects may not be accessed directly as the key object in general and its instances in particular do not provide or contain the object identifier of the dependent object and its instances respectively. Therefore, the instance of the dependent object has to be searched in the database using the identifier of the key object instance as search criteria calling an appropriate Find-service. Find services are services that search for business objects by (a) using certain criteria and (b) analyzing the data of the business object's instances with respect to these criteria thus to identifying those instances whose data do fulfill these criteria. The Find service at least gives back identifiers of all objects whose data meet the search criteria. Alternatively, all of the data of these instances or only parts of it can be returned. A possible convention to name this kind of Find service could be "Find <business object name> by <referenced object>", e.g. "Find Delivery by Sale Order". When a Find-service only returns partial computer object instance data, subsequently the appropriate Read-service has to be invoked to retrieve the complete data.

In some embodiments, a prerequisite for applying the tracking tool to an enterprise resource planning (ERP) system is that this system provides appropriate Read- and Find-services as described above, and that the correct services can be identified from the computer object name or description in the enterprise service repository which might be part of the ERP system or a separate system. A naming convention as described above allows for automation of the identification and for the system to execute as shown in FIG. 4B.

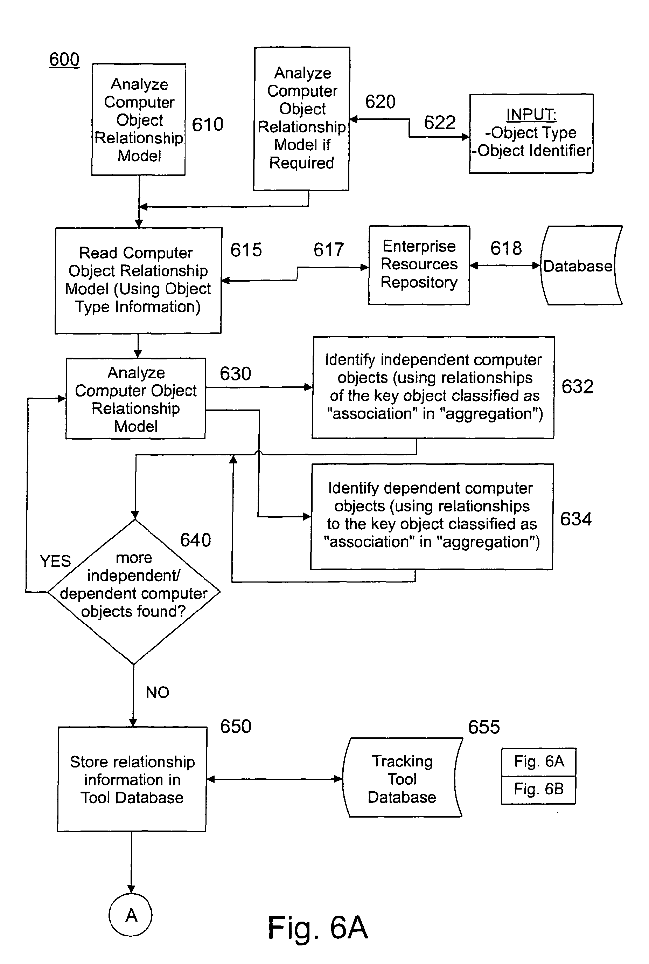

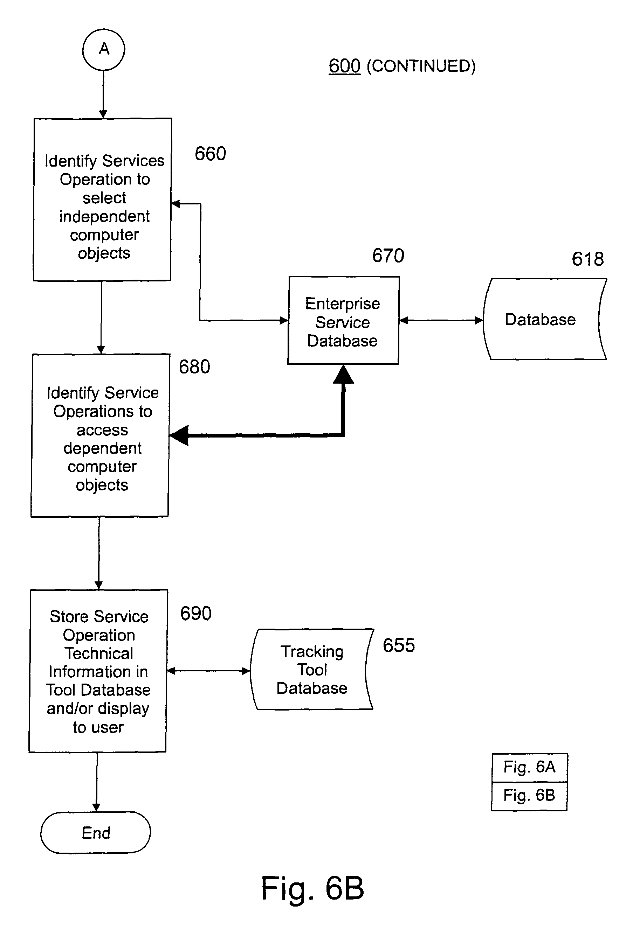

In order to insure complete tracking of a process, it would be beneficial to not only determine how the process was designed, i.e., modeled, to flow, but how the process actually flows. An exemplary method for tracking the process flow will now be described with reference to FIGS. 6A and 6B.

FIGS. 6A and 6B show amore detailed flowchart of the operation of the tracking tool during the analysis phase (e.g., phase 1 of FIGS. 4A and 4B) explaining the analysis method used by a tracking tool according to an exemplary embodiment of the present invention.

The analysis method will now be explained with reference to FIG. 6A. After the model has been established, the model is stored in a database, such as an enterprise services repository. At the time when the model has been stored or updated (as shown in FIG. 4B or when it is determined that an object in the executed process needs to be tracked (as shown in FIG. 4A), the model stored in the database is scanned (Step 610). A particular computer object, such as a business document, that a user wants to use to start tracking the executed process can be called a key computer object. In order for the system to track the key computer object, information 622, such as the object type and the object identifier, can be provided to the system. The object identifier is preferably unique in the sense that it provides information about the computer system identification, such as where the computer object instance can be found. If this information is not contained in the data type of the object identifier or in the object identifier itself, this information has to be provided separately to the tracking tool especially if a multi-system ERP landscape is used and instances of one computer object class can occur in one or more ERP systems. The computer object identifier and object type are preferably specific to a particular process product, such as a sales order, a document or form. The key object is identified to the system (Step 620 via 622). The model is analyzed (630) to identify computer objects that are independent (632) of the key object and dependent (634) on the key computer object in the model.

Identifying computer objects that are independent of the key computer object is accomplished in Step 632 by reviewing the relationships of other computer objects in the business process using the relationships of the key computer object. The relationships of the key computer object are stored in a data structure associated with the key object type and identifier like that one shown in FIGS. 2 and 5 or any appropriate structure similar to that. When the relationship in the model is classified as an association or aggregation, the computer object having the association or aggregation relationship is identified as a computer object that is independent of the key computer object, i.e. a superior computer object, when its role in the relationship is that of an independent object.

As previously noted, FIGS. 2 and 5 illustrate a data structure showing various data objects, such as those in FIG. 1, their relationships and their role in this relationship that can be presented to a user. Dependent objects are identified in Step 634 by reviewing the relationships of the computer objects in the model. When the relationship in the model is classified as an association or aggregation, the computer object having the association or aggregation relationship is identified as a computer object that is dependent to the key computer object, i.e. a subordinate computer object, when its role in the relationship is that of an dependent object. The reviewing of the relationships continues (Step 640) until no independent computer objects or dependent computer objects to the key computer object are found. The reviewing is then repeated for all found independent and dependent computer objects (called secondary key computer objects in the following) of the original key computer object (primary key computer object) in the same way using them in the role of the key computer object now. This iterative process ends when no more independent or dependent computer objects are identified for any of the secondary key computer objects. The information found from the review, such as the object name and the global data types of the object type and object identification of the independent and dependent computer objects, are stored (650) in a database. The database 655 can be a database specifically for the tracking tool, or a shared storage resource, such as a partitioned hard disc.

In accordance with an embodiment of the invention, the enterprise services repository database 416 comprises a number of predefined computer objects and an entity relationship model specifying the relationships of these computer objects. When a data processing task is executed by the enterprise resource planning system 432 instances of a subset of these predefined computer objects are created and stored in the enterprise resource planning system database 436. In order to reverse engineer the second graph that represents the instances of the computer objects and their relationships which are created when a given data processing task is executed, the tracking tool 444 generates the tracking tool database 442 by creating a database table entry of the type shown in fig. 5 for each one of the computer objects defined in the enterprise services repository 412 and namely by its enterprise services repository database 416. The tracking tool 444 thus captures topological information of the first graph of the entity relationship model that specifies the relationships between the predefined computer objects. In addition, the tracking tool 444 enters a first and a second method into the tracking tool database 442 for each computer object in order to enable a search for instances of related computer objects in the forward and backward directions.

The tracking tool 444 and the tracking tool database 442 are stored in a main memory 446 of the data processing system shown in fig. 4A for optimal performance.

The user may select one of the instances of the computer objects stored in the enterprise resource planning system database 436 for the tracking tool 444. In response the tracking tool 444 reads the database table entry for a user selected instance from the tracking tool database 442 and it uses the first and the second methods contained in that database table entry in order to search for successors and predecessors of the user selected instance in the second graph to which the user selected instance belongs. Such a search for successors and predecessors is performed for each successor and predecessor identified during that search operation until no further successors or predecessors can be found. As a result all nodes of the second graph to which the user selected instance belongs have been identified and can be stored and/or output by the tracking tool 444 for further usage.
FIG. 6B illustrates the method Steps after the information from the model is obtained. In Step 660, a query is sent to a database, such as a services database within an enterprise services repository, containing the services available to the process tracking tool for accessing the independent computer objects. Services can be a software module that performs work for computer applications, such as the tracking tool implementing the exemplary method. The work performed can include extracting data from objects, performing a function on the data, and returning the result. The database returns 670 technical information like the service name, system information and service interface information that enables the tracking tool to call the services in an automated way without human interaction for accessing the independent computer objects. Similarly, in Step 680, a query is sent to the database for a service to access the dependent computer objects. When the information is returned the service information is stored in a database, such as database 655 referenced above and shown in figure

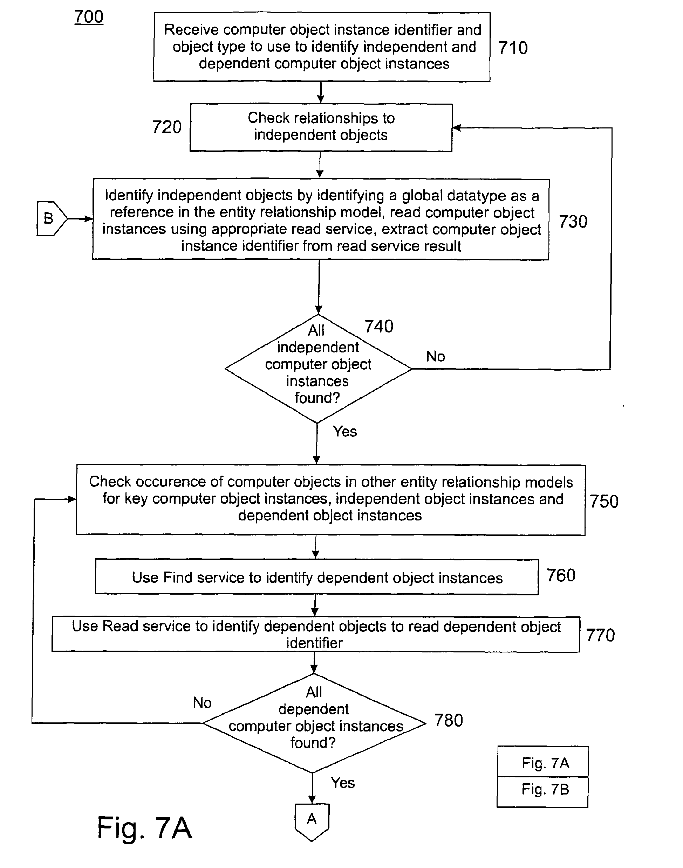

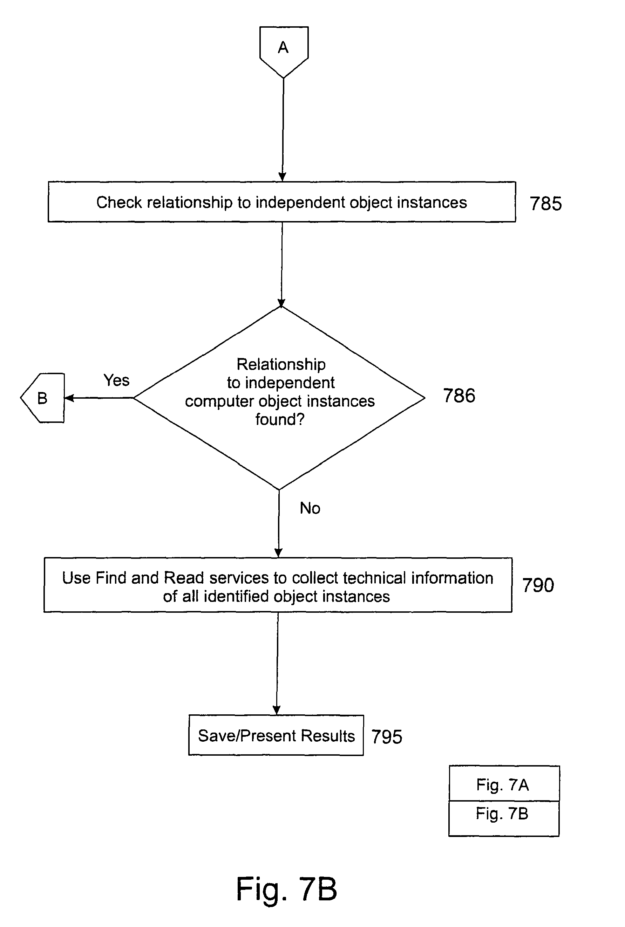

The method for tracking a key computer object will now be described in detail with respect to FIGS. 7A and 7B. The process 700 provides for tracking a computer object as it is used in a process. For example, if the computer object is a document, the tracking will be based on the document flow through the executed process and the interaction of the different business objects with the document. In Step 710, a computer object identifier of an instance and the object type of that instance that can be used to identify occurrences of the key computer object and locating computer objects superior to and subordinate to the key computer object in the executed process are provided to the processor. The computer object instance identifier and object type can be provided through a user interface or some other interface to a processor. The computer object identifier of an instance and the object type of that instance can be used to check relationships between the key computer object and independent objects in Step 720. In the model, independent objects are also identified by a global datatype, which is used as a reference object. Identifying the independent object instance is done by calling an appropriate read service, which was previously identified and stored in the tracking tool database (See FIG. 6B), to read the business computer object instance using the identifier of that instance. A database or system memory can also be searched to locate any computer object instances that are independent of a key computer object instance and dependent from the key computer object instance. Once the independent object instance has been identified, the computer object identifier of the independent object instance is extracted from the read service results. (Step 730). It is then determined whether all of the objects superior to the key computer object have been identified. (Step 740). If not, the above Steps (Steps 710-740) are repeated. If so, occurrences of the key business computer object in other business computer object models are searched for by the system (Step 750). Referring back to FIG. 5A, an exemplary data structure shows a list of occurrences in other business object models. For example, the key computer object is sales order object, the database of previously scanned business models (See Step 510 of FIG. 5A) can be searched using the key computer object identifier and object type. The resulting graphical user interface displays all of the business models where the key computer object is supposed to be used.

After finding the independent object instances and other object instances superior to the key computer object, the subordinate object instances, or object instances that (a) depend from the key computer object instance (primary object instance) and object instances that (b) depend from independent computer object instances of the key computer object instance, i.e. object instances (secondary object instances) for which the key computer object instance is a dependent object instance, must be located. All these dependent, or subordinate, object instances are located by calling a Find service, which was previously identified and stored in the tracking tool database (See FIG. 6B). The Find service identifies subordinate object instances in the executed process (Step 760). Once the subordinate object instance is identified, a Read service is called to read the data of the respective identified subordinate object instances (Step 770). A determination is made at Step 780 whether all of the subordinate objects have been identified and all instances of the subordinate objects have been found and read. If not, Steps 750-770 are repeated. To execute Steps 720-770 before Steps 750-780 is not mandatory and implementations of the tracking tool could use any suitable sequence. Having completed the described process from Step 710 to 780 for all the primary and secondary object instances, all identified dependent object instances are checked in Step 785 (FIG. 7B) whether they contain references to instances of computer objects that have been identified as computer object instances being independent of them. If such references are identified (Step 786), the process continues with Step 730 (FIG. 7A) for the identified computer object instances.

If no references are found, the process continues with the Steps 790 and 795. The database is searched using both the superior object identifiers and the subordinate object identifiers to collect data on how the key object actually is used in the executed process. This is done by using Find and Read services to collect technical information of identified independent and dependent objects (Step 790). In an alternative embodiment, step 790 can also be part of the iteration cycle and occur between steps 785 and 786. Once this data is collected, it can be compared and the results are saved and/or presented on a display device for review by a user (Step 795). Implementations of the tracking tool can also be made that do not need Step 790, because the useable data is collected during Steps 710-786 and store the data either in the end as shown in Step 795 or at any other suitable point in time during the tracking process, e.g. between steps 730 and 740 as well as between steps 770 and 780.

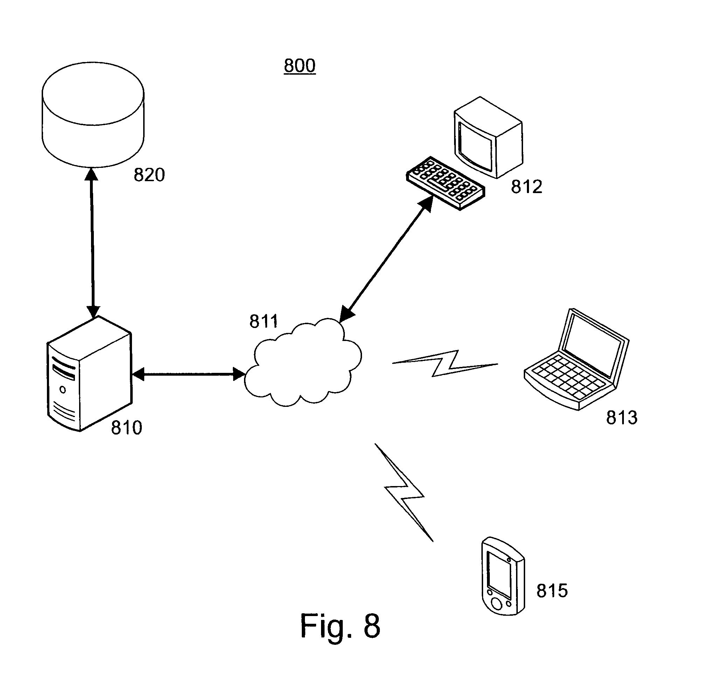

FIG. 8 illustrates an exemplary system for tracking a key computer object through an executed process. The exemplary system 800 comprises a server 810, network 811, client terminals 812, client laptops 813, client handhelds 815 and data repository 820.

The server 810 comprises a processor and can host a plurality of software modules accessible by client terminals 812, client laptops 813, or client handhelds 815 through the network 811. Alternatively, the plurality of software modules, or portions of, can be downloaded to devices 812, 813 or 815. The plurality of software modules can include a first module for identifying a key computer object in a process. A second module can analyze a model of the implemented software system and application database to identify computer objects that are superior to and subordinate to a key computer object in the model. A third module can perform the function of locating, in the executed process, instances of the key computer object and computer objects superior to and subordinate to the key computer object. Comparisons of the results of the analyzing to the results of the locating can be performed by a fourth module. Data storage 820 can be a relational database that includes the model, and stores the results obtained by the second module, the third module and the fourth module.

Each of devices 812, 813 and 815 can comprise a processor and a display device, and be capable of receiving inputs from a graphical user interface. In addition, devices 812, 813 and 815 can be used to generate data and documents usable in the executed process.

Network 811 can be the Internet, an intranet, a public network, a private network, a local area network (LAN), a wide area network (WAN), a wireless network, or any network suitable for implementing the exemplary embodiments.

The software modules including program instructions can be stored on computer readable media such as discs, including CD and DVD, flash memory, hard drives including magnetic and optical drives, or any other suitable computer readable media, and that will cause a computer or processor to execute the program instructions. The software language used to write the software modules can be any that is suitable for implementing the described exemplary embodiments, and are known to those of skill in the art.

It should be understood that there exist implementations of other variations and modifications of the invention and its various aspects, as may be readily apparent to those of ordinary skill in the art, and that the invention is not limited by specific embodiments described herein. Features and embodiments described above may be combined with and without each other. It is therefore contemplated to cover any and all modifications, variations, combinations or equivalents that fall within the scope of the basic underlying principals disclosed and claimed herein.

## Claims

1. A data processing system comprising:
- an enterprise services repository (412) comprising a number of predefined computer objects and an enterprise services repository database (416) containing an entity relationship model of the relations between the computer objects, the enterprise services repository database being accessible by the enterprise services repository, the computer object and their relationships as modelled by the entity relationship database being represented by a first graph, each node of the first graph being representative of one of the computer objects and each edge of the first graph being representative of a relationship between two of the computer objects that are linked by that edge in the first graph,
- an enterprise resource planning system for execution of a plurality of data processing tasks comprising an enterprise resource planning database for storing sets of instances of the computer objects, whereby one of the sets is created when one of the data processing tasks is executed, each one of the sets being represented by a second graph, each node of the second graph being representative of one of the instances of the computer objects and each edge of the second graph being representative of a relationship between two of the instances that are linked by that edge,
- a tracking tool (444) being operable to perform pre-processing using the enterprise services repository database by accessing the enterprise services repository database through the enterprise services repository, the pre-processing comprising creating a database table entry into a tracking tool database (442) for each computer object of the entity relationship model, each entry containing a specification of the relationships to other computer objects as specified in the entity relationship model for the computer object for which that database table entry is created, a specification of the role of that computer object, the role being one of independent object or dependent object, a first method to identify a predecessor node in one of the second graphs and a second method to identify a successor node in one of the second graphs,
- main access memory means (446) for storing the tracking tool database that has been created by the tracking tool as a result of the pre-processing,
- the tracking tool being operable to receive a user's selection of one of the instances of the computer objects that are stored in the enterprise resource planning database, and to use the first and the second method of the user selected instance to identify any successor and predecessor nodes in one of the second graphs to which the selected instance belongs and using the first and the second methods of the identified successor and predecessor nodes, if any, to identify further successors and predecessors in that second graph until all nodes of that second graph have been identified,
- storing and/or outputting information being descriptive of the second graph.

2. The data processing system of claim 1, each one of the predefined computer objects comprising one of the first and/or second methods, the tracking tool being operable to copy the first and/or second methods from the enterprise services repository into the tracking tool database.

3. The data processing system of claim 1 or 2, wherein the first methods are contained within the predefined computer objects, and further comprising user interface means for entering the second methods into the tracking tool database.

4. A computer-implemented method for tracking an instance of a key computer object through an executed process, comprising:
- identifying the key computer object to be tracked in the executed process;
- analyzing a computer object relationship model of the software executing the process and a database to locate any computer objects that are independent of the key computer object and dependent from the key computer object in the computer object relationship model;
- identifying services that access the key computer object, instances of the key computer object and located computer objects and instances thereof that are independent of and dependent from the key computer object;
- retrieving technical information related to the instance of the key computer object and instances of the located computer objects using a key computer object instance identifier with the identified services; and
- outputting the technical information to a user.

5. The computer-implemented method of claim 4, further comprising:
- reconstructing and executed process using the retrieved technical information.

6. The computer-implemented method of claim 4 or 5, wherein the technical information includes instance object types and object instance identifiers.

7. The computer-implemented method of claim 4, 5 or 6, wherein the identifying the key computer object comprises:
- receiving an object type and object instance identifier of the key computer object via a graphical user interface, and/or wherein the identifying services comprises:
- receiving an object type and object instance identifier of the key computer object via a graphical user interface.

8. The computer-implemented method of any one of claims 4 to 7, the identifying in the executed process comprises:
- selecting a service from a service database to access the instances of the key computer object and the instances of the computer objects independent of and dependent from the key computer object; and
- calling the selected service to access the instances of the key computer object and the computer objects independent to and dependent from the key computer object, and/or, wherein the analyzing comprises:
- reviewing the relationships of the computer objects in the computer object relationship model with respect to the key computer object; and
- when a computer object related to the key computer object contains a reference to the key computer object, identifying the computer object containing the reference as a dependent computer object that is dependent on the key computer object.

9. The computer-implemented method of any one of claims 4 to 8, wherein the analyzing comprises:
- reviewing the relationships of the computer objects in the computer object relationship model with respect to the key computer object; and
- when a computer object is referenced by the key computer object and does not reference a relationship in the computer object relationship model to another object, identifying the computer object as an independent computer object that is independent of the key computer object and/or, wherein the analyzing comprises:
- searching a database to locate any computer object instances that are independent of a key computer object instance and dependent from the key computer object instance.

10. A computer readable medium embodied with instructions for a method for tracking an instance of a key computer object through an executed process, the instructions causing a computer to execute the method, comprising:
- identifying the key computer object to be tracked in the executed process;
- analyzing a computer object relationship model of the software executing the process and a database process to locating any computer objects that are independent of the key computer object and dependent from the key computer object in the computer object relationship model;
- identifying services that access the key computer object, instances of the key computer object and located computer objects independent of and dependent from the key computer object;
- retrieving technical information related to the instance of the key computer object and instances of the located computer objects using a key computer object instance identifier with the identified services; and
- outputting the technical information to a user.

11. The computer readable medium of claim 10, further comprising:
reconstructing the executed process using the technical information.

12. The computer readable medium of claim 10 or 11, further comprises:
- scanning the computer object relationship model to determine the organization of computer objects in the executed process, wherein the scanning includes compiling a list of computer object types and object instance identifiers according to the relationships of the computer objects.

13. The computer readable medium of claim 10, 11 or 12, wherein the identifying the key computer object comprises:
- receiving an object type and object instance identifier of the key computer object from a graphical user interface.

14. The computer readable medium of any one of claims 10 to 13, wherein the identifying services comprises:
- receiving an object type and object instance identifier of the key computer object via a graphical user interface.

15. The computer readable medium of any one of claims 10 to 14, wherein the analyzing comprises:
- reviewing the relationships of the computer objects in the computer object relationship mode with respect to the key computer object; and
- when a computer object is referenced by the key computer object and does not reference a relationship in the computer object relationship model to another object, identifying the computer object as an independent computer object that is independent of the key computer object.
